# EUROPÄISCHE PATENTSCHRIFT

(11) **EP 1 564 536 B1**
(45) Veröffentlichungstag und Bekanntmachung des Hinweises auf die Patenterteilung: **26.03.2008**
(21) Anmeldenummer: 05001981.9
(22) Anmeldetag: 01.02.2005
(51) Int. Cl.: G01J 5/04, G01J 5/08

(54) **Vorrichtung und Verfahren zur Messung von Temperatur in Metallschmelzen**
Device and method for detecting the temperature of a molten metal
Dispositif et procédé de détection de la température d'un métal liquide

(30) Priorität: 11.02.2004 US 776883
(43) Veröffentlichungstag der Anmeldung: 17.08.2005
(73) Patentinhaber: Heraeus Electro-Nite International N.V., 3530 Houthalen (BE)
(72) Erfinder: Coleman, Jr., Thomas C., Beaver, PA 15009 (US)
(74) Vertreter: Kühn, Hans-Christian

(56) Entgegenhaltungen:
- EP-A- 0 655 613
- PATENT ABSTRACTS OF JAPAN Bd. 1995, Nr. 11, 26. Dezember 1995 (1995-12-26) -& JP 07 229791 A (NKK CORP), 29. August 1995 (1995-08-29)

## Beschreibung

Die Erfindung betrifft eine Vorrichtung zur Messung von Temperatur in Metallschmelzen mit einer optischen Faser, die mit einem Messinstrument direkt oder indirekt verbunden und von einem Träger gehalten ist, wobei ein Eintauchende der Faser durch einen in der Schmelze verbrauchbaren Körper geführt ist. Die Erfindung betrifft weiterhin ein Verfahren zur Messung von Temperatur in Metallschmelzen mit einer optischen Faser, die mit einem Messinstrument und optional mit einem Detektor direkt oder indirekt verbunden und von einem Träger gehalten ist.

Derartige Vorrichtungen sind beispielsweise aus EP 655 613 A1 bekannt. Bei der hier beschriebenen Vorrichtung weist die optische Faser eine aus mehreren Schichten bestehende Schutzhülle auf. Die Schutzhülle löst sich auf mit einer Geschwindigkeit von 1 bis 10 cm pro Sekunde und kann dadurch die optische Faser nach einer relativ kurzen Zeit nicht mehr optimal schützen. Die Schutzhülle enthält unter anderem Partikel mit einem Schmelzpunkt höher als die Temperatur der zu messenden Metallschmelze.

Ähnliche Vorrichtungen sind aus JP 03-126500 oder JP 03-284709 bekannt. Die Verwendung von optischen Fasern allgemein zur Messung in Metallschmelzen ist aus der Literatur darüber hinaus vielfach bekannt.

Aufgabe der vorliegenden Erfindung ist es, die bekannten Vorrichtungen und insbesondere den Schutz der optischen Faser zu verbessern. Aufgabe der Erfindung ist es weiterhin, ein Verfahren zur Messung von Temperatur in Metallschmelzen mit einer optischen Faser bereitzustellen.

Die Aufgabe wird gelöst durch die Merkmale des unabhängigen Anspruchs 1. Vorteilhafte Ausgestaltungen sind in den Unteransprüchen angegeben.

Dadurch, dass der Körper eine Verbrauchsgeschwindigkeit von höchstens 10 cm pro Minute aufweist und dass die Verbrauchsgeschwindigkeit ähnlich oder höher ist wie die Geschwindigkeit, mit der die Struktur der optischen Faser zerstört wird, ist einerseits gesichert, dass während der Messung stets eine freie Oberfläche der unzerstörten optischen Faser zur Messung zur Verfügung steht und andererseits die optische Faser in ihrer Länge ausreichend geschützt ist. Die Zerstörung der Struktur der optischen Faser beginnt zwangsläufig an ihrem Eintauchende, sie setzt sich in Achsrichtung fort, soweit sie den die Struktur zerstörenden Bedingungen (hohe Temperatur, Aggressivität der Metallschmelze usw.) ausgesetzt ist. Dadurch, dass der die Faser umgebende Körper allmählich, ebenfalls von seinem Eintauchende her zerstört wird, steht ständig ein neuer Oberflächenbereich der Faser mit der Metallschmelze in Kontakt, um Strahlung im Sinne eines schwarzen Strahlers aufzunehmen und zur Temperaturbestimmung weiterzuleiten. Zweckmäßigerweise beträgt die Verbrauchsgeschwindigkeit des Körpers höchstens 1 cm pro Minute. Die Verbrauchsgeschwindigkeit bezieht sich dabei auf einen Temperaturbereich zwischen 600°C und 1700 °C und insbesondere zwischen 1400 °C und 1700 °C und ist eine Eigenschaft des Körpers, die unter anderem vom Material und der Struktur des Körpers (zum Beispiel die Bindung des Materials) abhängt.

Es ist vorteilhaft, dass der Körper einen höheren Schmelzpunkt als Eisen (bzw. Stahl oder Gusseisen) aufweist sowie in einer Eisenschmelze (bzw. Stahlschmelze, Gusseisenschmelze) nicht lösbar ist. Insbesondere ist es vorteilhaft, dass der Körper aus mindestens einem Material aus der Gruppe Gießereisand, feuerfester Zement, gebundene Flugasche gebildet ist. Das Material kann mittels Bindemittel gebunden sein. Gießereisand, feuerfester Zement und gebundene Flugasche sind insbesondere geeignet für Metallschmelzen im Temperaturbereich zwischen 600 °C und 1700 °C. Derartige Materialien sind einerseits sehr hitzebeständig, die daraus gebildeten Körper lösen sich in der Metallschmelze im wesentlichen durch Erosion auf, wobei die Verbindung zwischen den einzelnen Partikeln des Materials gelöst wird. Dieser Vorgang vollzieht sich im wesentlichen vom Eintauchende her in Richtung der Längsachse, also in Richtung der Achse der optischen Faser. Die Faser ist vorteilhafterweise aus Quarzglas gebildet

Es ist zweckmäßig, dass die Faser unmittelbar von einem Metallrohr, insbesondere von einem Stahlrohr umgeben ist. Des weiteren kann es vorteilhaft sein, dass die optische Faser mit einem Detektor direkt verbunden ist, wobei der Detektor in dem verbrauchbaren Körper angeordnet sein kann.

In vorteilhafter Weise ist in dem verbrauchbaren Körper ein Verbrauchssensor angeordnet, um insbesondere bei Langzeitmessungen eine Kontrolle über die generelle Funktionsfähigkeit der Vorrichtung zu erhalten. In dem verbrauchbaren Körper können vorteilhafterweise mechanische Stabilisatoren angeordnet sein, die einen kontrollierten Verbrauch verbessern- In einer zweckmäßigen Ausführungsform ist der verbrauchbare Körper lösbar an einem Ende des Trägers angeordnet, so dass er ausgetauscht werden kann, ohne die Funktionsfähigkeit der gesamten Vorrichtung als solche zu verringem. Zweckmäßig ist es, dass elektrische und/oder optische Signalleitungen in dem verbrauchbaren Körper mittels elektrischer und/oder optischer Kontakte mit einem Kontaktstück im Träger verbunden sind, um auch hier eine lösbare Verbindung zu erzielen,

Insbesondere ist es vorteilhaft, wenn die optische Faser als Endlosfaser ausgebildet ist und dass sie des weiteren beweglich in dem Träger und/oder dem verbrauchbaren Körper angeordnet ist. Dadurch können verbrauchte Teile der Faser einfach ersetzt werden durch Nachführen durch Träger und verbrauchbaren Körper hindurch.

Die Erfindung wird beispielhaft anhand einer Zeichnung erläutert. In der Zeichnung zeigt
- Figur 1: die schematische Darstellung einer Ausführungsform
- Figur 2: die schematische Darstellung einer weiteren Ausführungsform
- Figur 3: die schematische Darstellung einer dritten Ausführungsform der Erfindung.

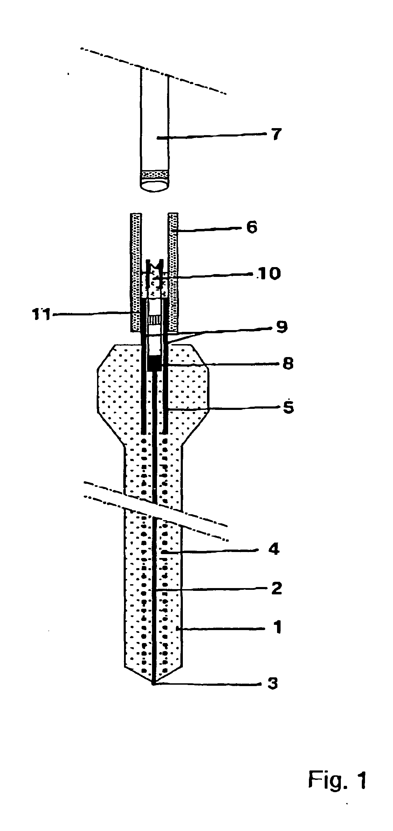

Der in Figur 1 dargestellte Körper 1 ist im wesentlichen aus beispielsweise Gießereisand, anorganischem Zement oder Flugasche gebildet, wobei der Zusammenhalt durch Pressen oder durch Verwendung von Bindemitteln gewährleistet ist. Der Körper 1, in dessen Längsachse sich die optische Faser 2 befindet, wird zum Messen in eine Metallschmelze getaucht Dabei nimmt die Stimseite 3 der optischen Faser 2 die Messsignale in Form einer optischen Strahlung auf, aus welcher die Temperatur der Metallschmelze in bekannter Weise berechnet wird.

Auf der Oberfläche des Körpers 1 kann eine abriebfeste Beschichtung aufgebracht sein, die den Körper 1 beim Handling, insbesondere außerhalb der Metallschmelze, schützt. Innerhalb der Metallschmelze wird der Körper 1 von der Eintauchspitze beginnend langsam aufgelöst, dadurch, dass der Zusammenhalt zwischen den Partikeln des Körpers 1 langsam aufgebrochen wird. Der Prozess beginnt an der Eintauchspitze, weil diese der Metallschmelze zuerst ausgesetzt ist und setzt sich dann in Achsenrichtung fort. Dabei wird die in dem Körper 1 angeordnete Faser 2 fortschreitend freigegeben, so dass weitere Oberflächenteile der Faser 2 der Metallschmelze ausgesetzt sind und Strahlung aufnehmen.

In den Körper eingearbeitet sind Stabilisatoren 4, die den Körper 1 stabilisieren und eine Zerstörung durch Bruch während des Transports oder Handlings verhindern und die den Verbrauch von der Eintauchspitze her begünstigen. An dem der Eintauchspitze entgegen gesetzten Ende des Körpers 1 ist in diesen ein Metallrohr 5 eingelassen, das zum einen als Verbrauchssensor für den Körper 1 dient, indem ein elektrisches Signal bei Berührung mit der Metallschmelze (also wenn der Körper soweit zerstört ist) erzeugt wird. Zum anderen dient das Metallrohr 5 der Halterung des Körpers 1. Dazu ist auf das Metallrohr 5 ein Trägerrohr 6 aus Metall aufgesteckt. In dieses Trägerrohr 6 wird eine Standardlanze 7 hineingesteckt, die die Handhabung der Vorrichtung ermöglicht. Zudem dient die Standardlanze 7 der Kontaktierung mit den aus dem Körper 1 kommenden Leitungen und der Signalweiterleitung. In dem in Figur 1 dargestellten Beispiel ist dies eine elektrische Signalleitung. Dazu ist innerhalb des Metallrahres 5 ein optischer Detektor 8 angeordnet, der die aus der Faser 2 kommenden optischen Signale aufnimmt und in elektrische Signale umwandelt, die dann mit Hiffe von Leitungen 9 weitergeleitet und an dem elekfrischen Kontaktstück 10 mit in der Standardlanze 7 angeordneten Gegenkontakten verbunden wird, so dass die Weiterleitung an z. B. elektronische Auswertungseinrichtungen erfolgen kann. In dem Metallrohr 5 ist eine Kalibriereinrichtung 11 angeordnet, in der ein Signalabgleich erfolgen kann mit vorgegebenen Standardwerten. Dadurch können beispielsweise während längeren Gebrauchs auftretende Längenänderungen der optischen Faser 2 und dadurch erfolgende Signalveriuste ausgeglichen werden.

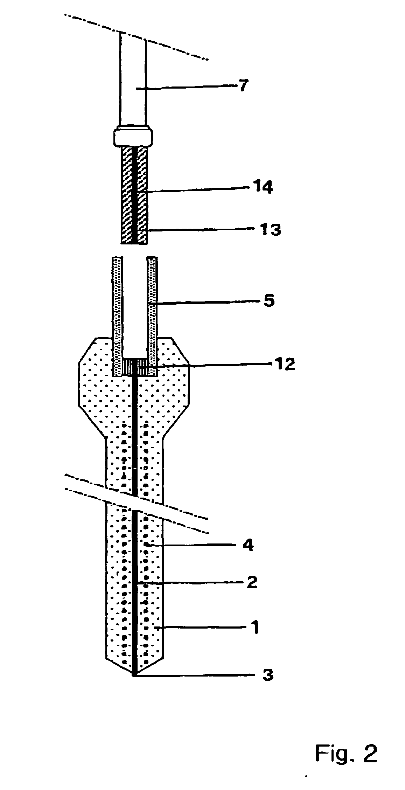

Figur 2 zeigt eine weitere Ausführungsform der Erfindung. Im Unterschied zu Figur 1, bei der die optischen Signale bereits im bzw. am Körper 1 in elektrische Signale umgewandelt und dann weitergeleitet werden, ermöglicht die Vorrichtung gemäß Figur 2 eine Weiterleitung von optischen Signalen, Hierzu ist in dem Metallrohr 5 ein optischer Verbinder 12 angeordnet, der die Einkupplung des optischen Signals in einen optischen Kontaktblock 13 ermöglicht, indem eine weitere optische Faser 14 die aus der Metallschmelze kommenden Signale aufnimmt und an eine stationäre Messeinrichtung weiterleitet, wo sie in elektrische Signale umgewandelt werden. Der optische Kontaktblock 13 ist steckbar. In beiden Ausführungsbeispielen kann der Körper 1 nach hinreichendem Verbrauch durch Abziehen von der Standardlanze 7 ausgetauscht und durch einen neuen Körper 1 ersetzt werden.

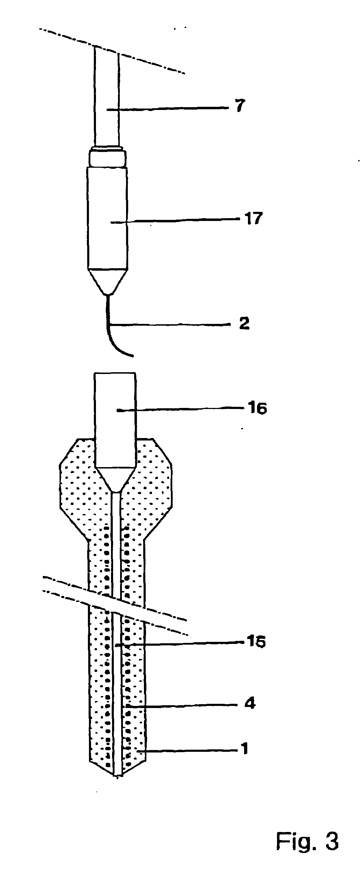

Während in den in Figuren 1 und 2 gezeigten Ausführungsformen die optische Faser 2 fest in dem Körper 1 angeordnet ist, zeigt Figur 3 eine Ausführungsform mit einer axialen Bohrung 15, durch die eine optische Faser 2 hindurchgeführt und nachgeführt werden kann. Dazu ist in dem Körper 1 an seinem der Eintauchspitze abgewandten Ende ein mechanischer Konnektor 16 (beispielsweise ein Metallrohr) angeordnet, in den ein an der Standardlanze 7 angeordneter Kontaktblock 17 hineingeschoben werden kann. Zur besseren Führung der optischen Faser 2 ist an der Verbindung des mechanischen Konnektors 16 mit der Bohrung 15 ein trichterförmiger Übergang vorgesehen, der ein besseres Hineingleiten der optischen Faser 2 in die Bohrung 15 ermöglicht. Innerhalb des Kontaktblockes 17 ist ein Faserführungssystem in an sich bekannter Weise angeordnet. Eine solche Anordnung ermöglicht es, eine sogenannte Endlosfaser entsprechend ihres Verbrauchs ständig nachzuführen, wodurch eine gewisse Unabhängigkeit des Verschleißes der optischen Faser 2 vom Verbrauch des Körpers 1 sichergestellt ist. Dies kann zu einer verbesserten und länger dauernden Funktionsfähigkeit der Messvorrichtung führen.

Selbstverständlich kann in den Ausführungsformen nach Figuren 2 und 3 ebenfalls eine Kalibriereinrichtung vorgesehen sein. Diese ist dann am anderen Ende der optischen Faser 2, also in der Regel in den ortsfesten Teilen der gesamten Messeinrichtung angebracht.

## Patentansprüche

1. Vorrichtung zur Messung von Temperatur in Metallschmelzen mit einer optischen Faser, die mit einem Messinstrument direkt oder indirekt verbunden und von einem Träger gehalten ist, wobei ein Eintauchende der Faser durch einen in der Schmelze verbrauchbaren Körper geführt ist, **dadurch gekennzeichnet, dass** der Körper (1) eine Verbrauchsgeschwindigkeit von höchstens 10 cm/min aufweist, dass die Verbrauchsgeschwindigkeit ähnlich oder höher ist wie die Geschwindigkeit, mit der die Struktur der optischen Faser (2) zerstört wird, dass die Faser (2) aus Quarzglas gebildet ist und dass in dem verbrauchbaren Körper (1) mechanische Stabilisatoren (4) angeordnet sind.

2. Vorrichtung nach Anspruch 1, **dadurch gekennzeichnet, dass** der Körper (1) eine Verbrauchsgeschwindigkeit von höchstens 1 cm/min aufweist.

3. Vorrichtung nach Anspruch 1 oder 2, **dadurch gekennzeichnet, dass** der Körper (1) einen höheren Schmelzpunkt als Eisen aufweist sowie in einer Eisenschmelze nicht lösbar ist.

4. Vorrichtung nach einem der Ansprüche 1 bis 3, **dadurch gekennzeichnet, dass** der Körper (1) aus mindestens einem Material aus der Gruppe Gießereisand, feuerfester Zement, gebundene Flugasche gebildet ist.

5. Vorrichtung nach einem der Ansprüche 1 bis 4, **dadurch gekennzeichnet, dass** die Faser (2) von einem Metallrohr, insbesondere von einem Stahlrohr umgeben ist.

6. Vorrichtung nach einem der Ansprüche 1 bis 5, **dadurch gekennzeichnet, dass** die Faser (2) mit einem Detektor (8) verbunden ist.

7. Vorrichtung nach Anspruch 6, **dadurch gekennzeichnet, dass** der Detektor (8) in dem verbrauchbaren Körper (1) angeordnet ist.

8. Vorrichtung nach einem der Ansprüche 1 bis 7, **dadurch gekennzeichnet, dass** in dem verbrauchbaren Körper (1) ein Verbrauchssensor angeordnet ist.

9. Vorrichtung nach einem der Ansprüche 1 bis 8, **dadurch gekennzeichnet, dass** der verbrauchbare Körper (1) lösbar an einem Ende des Trägers (7) angeordnet ist.

10. Vorrichtung nach einem der Ansprüche 1 bis 9, **dadurch gekennzeichnet, dass** elektrische und/oder optische Signalleitungen in dem verbrauchbaren Körper (1) mittels elektrischer und/oder optischer Kontakte mit einem Kontaktstück (10) im Träger verbunden sind.

11. Vorrichtung nach einem der Ansprüche 1 bis 9, **dadurch gekennzeichnet, dass** die optische Faser (2) als Endlosfaser ausgebildet ist,

12. Vorrichtung nach einem der Ansprüche 1 bis 9 oder 11, **dadurch gekennzeichnet, dass** die optische Faser (2) beweglich in dem Träger (7) und/oder dem verbrauchbaren Körper (1) angeordnet ist.

## Claims

1. Device for measuring the temperature in metal melts with an optical fibre, which is directly or indirectly connected to a measuring instrument and is held by a carrier, an immersion end of the fibre being guided through a melt-consumable body, **characterised in that** the body (1) has a consumption rate of at most 10 cm/min, **in that** the consumption rate is similar or higher than the rate at which the structure of the optical fibre (2) is destroyed, **in that** the fibre (2) is formed from quartz glass and **in that** mechanical stabilisers (4) are arranged in the consumable body (1).

2. Device according to claim 1, **characterised in that** the body (1) has a consumption rate of at most 1 cm/min.

3. Device according to claim 1 or 2, **characterised in that** the body (1) has a higher melting point than iron and is not soluble in an iron melt.

4. Device according to any one of claims 1 to 3, **characterised in that** the body (1) is formed from at least one material from the group: foundry sand, refractory cement and bonded fly ash.

5. Device according to any one of claims 1 to 4, **characterised in that** the fibre (2) is surrounded by a metal tube, in particular by a steel tube.

6. Device according to any one of claims 1 to 5, **characterised in that** the fibre (2) is connected to a detector (8).

7. Device according to claim 6, **characterised in that** the detector (8) is arranged in the consumable body (1).

8. Device according to any one of claims 1 to 7, **characterised in that** a consumption sensor is arranged in the consumable body (1).

9. Device according to any one of claims 1 to 8, **characterised in that** the consumable body (1) is detachably arranged at one end of the carrier (7).

10. Device according to any one of claims 1 to 9, **characterised in that** electric and/or optical signal lines in the consumable body (1) are connected by means of electric and/or optical contacts to a contact piece (10) in the carrier.

11. Device according to any one of claims 1 to 9, **characterised in that** the optical fibre (2) is configured as a continuous filament.

12. Device according to any one of claims 1 to 9 or 11, **characterised in that** the optical fibre (2) is moveably arranged in the carrier (7) and/or the consumable body (1).

## Revendications

1. Dispositif de mesure de températures dans les bains de fusion avec une fibre optique, qui est reliée directement ou indirectement à un instrument de mesure et est maintenue par un support, dans lequel une extrémité d'immersion de la fibre est guidée par un corps consommable dans le bain, **caractérisé en ce que** le corps (1) présente une vitesse de consommation de 10 cm/mn au maximum, **en ce que** la vitesse de consommation est égale ou supérieure à la vitesse avec laquelle la structure de la fibre optique (2) est détruite, **en ce que** la fibre (2) est en verre au quartz et **en ce que** des stabilisateurs mécaniques (4) sont disposés dans le corps consommable (1).

2. Dispositif selon la revendication 1, **caractérisé en ce que** le corps (1) présente une vitesse de consommation de 1 cm/mn au maximum.

3. Dispositif selon la revendication 1 ou 2, **caractérisé en ce que** le corps (1) présente un point de fusion supérieur au fer et qui ne peut pas être dissous dans un bain de fonte de fer.

4. Dispositif selon l'une des revendications 1 à 3, **caractérisé en ce que** le corps (1) est constitué d'au moins un matériau du groupe constitué par le sable de fonderie, le ciment réfractaire, les cendres volantes.

5. Dispositif selon l'une des revendications 1 à 4, **caractérisé en ce que** la fibre (2) est entourée d'une gaine métallique, en particulier par un tube d'acier.

6. Dispositif selon l'une des revendications 1 à 5, **caractérisé en ce que** la fibre (2) est reliée à un détecteur (8).

7. Dispositif selon la revendication 6, **caractérisé en ce que** le détecteur (8) est disposé dans le corps consommable (1).

8. Dispositif selon l'une des revendications 1 à 7, **caractérisé en ce qu'**un capteur de consommation est disposé dans le corps consommable (1).

9. Dispositif selon l'une des revendications 1 à 8, **caractérisé en ce que** le corps consommable (1) est disposé détachable à une extrémité du support (7).

10. Dispositif selon l'une des revendications 1 à 9, **caractérisé en ce que** des lignes signal électriques et/ou optiques dans le corps consommable (1) sont reliées à un élément de contact (10) dans le support au moyen de contacts électriques et/ou optiques.

11. Dispositif selon l'une des revendications 1 à 9, **caractérisé en ce que** la fibre optique (2) est réalisée sous la forme d'une fibre continue.

12. _Dispositif selon l'une des revendications 1 à 9 ou 11, **caractérisé en ce que** la fibre optique (2) est disposée mobile dans le support (7) et/ou dans le corps consommable (1).
